Europäisches Patentamt

European Patent Office

Office européen des brevets

(19)

(11) Numéro de publication: **0 311 150**
**A1**

## (12) DEMANDE DE BREVET EUROPEEN

(21) Numéro de dépôt: **88119008.6**

(22) Date de dépôt: **24.09.85**

(51) Int. Cl.4: **G01S 7/62 , G01S 15/89 ,**
**G10K 11/32 , G10K 11/34**

(30) Priorité: **25.09.84 FR 8414708**

(43) Date de publication de la demande:
**12.04.89 Bulletin 89/15**

(60) Numéro de publication de la demande initiale
en application de l'article 76 CBE : **0 177 407**

(84) Etats contractants désignés:
**DE GB IT NL**

(71) Demandeur: **CGR ULTRASONIC**
**9, Chaussée de Paris**
**F-77102 Villenoy-les-Meaux(FR)**

(72) Inventeur: **Maerfeld, Charles**
**Cabinet Ballot-Schmit 84 avenue Kléber**
**F-75116 Paris(FR)**

(74) Mandataire: **Ballot, Paul Denis Jacques et al**
**Cabinet Ballot-Schmit 84, avenue Kléber**
**F-75116 Paris(FR)**

(54) **Sonde à ultrasons pour balayage sectoriel électronique, et échographe incorporant une telle sonde.**

(57) Sonde à ultrasons et échographe à balayage sectoriel statique notamment pour image à grand angle.

Selon un mode de réalisation possible, la sonde comporte plusieurs groupes ($G_1$, $G_2$, $G_3$) d'éléments transducteurs ($T_i$) faisant entre eux des angles obtus ($\hat{a}$) de façon à définir globalement un contour convexe de sorte que les retards nécessaires pour obtenir un balayage complet soient plus faibles qu'avec une barrette linéaire classique et donc plus faciles à maîtriser.

Application à l'échographie médicale.

FIG_2

EP 0 311 150 A1

# SONDE A ULTRASONS POUR BALAYAGE SECTORIEL ELECTRONIQUE ET ECHOGRAPHE INCORPORANT UNE TELLE SONDE

L'invention concerne une sonde à ultrasons à balayage sectoriel electronique mettant en jeu la technique d'insonation connue sous le nom de "phased array" où un même groupe d'éléments transducteurs est excité à chaque séquence d'émission-réception avec des retards prédéterminés entre les éléments transducteurs du groupe. L'invention concerne aussi un échographe incorporant ce nouveau type de sonde.

Un échographe à balayage sectoriel électronique connu comporte une sonde incorporant un groupe d'éléments transducteurs distincts alignés suivant un segment de droite relativement court. A titre d'exemple, les dimensions de la barette d'éléments transducteurs piezo électrique sont couramment de 20 mm de long et de 15 mm de large, environ. Le nombre d'éléments transducteurs est généralement inférieur à 100 et plus couramment compris entre 30 et 70. Contrairement aux systèmes à barrettes comportant un nombre supérieur d'éléments et parmi lesquels un groupe différent d'éléments transducteurs est sélectionné à chaque séquence d'émission-réception, tous les éléments transducteurs du groupe sont sollicités à chaque séquence d'émission-réception. On excite les éléments transducteurs avec des retards prédéterminés entre eux puis on effectue la sommation des échos perçus par ces mêmes éléments, de préférence en leur appliquant la même loi de retards. A l'émission, la loi de retards conditionne à la fois l'orientation du faisceau d'ultrasons et les caractéristiques focales de ce faisceau. A la réception, la même loi de retards appliquée entre les différentes voies de traitement des signaux, avant leur sommation, crée une focalisation dynamique et privilégie la réception suivant une certaine direction. On conçoit donc que la partie électronique de ce type d'échographe est très complexe et coûteuse. En outre, il est très difficile de réaliser un balayage correct sur un secteur angulaire important. En effet, plus l'angle d'inclinaison est grand par rapport à la barette piézo électrique matérialisant le groupement d'éléments transducteurs, plus les retards mis en jeu entre les éléments doivent être importants. A titre d'exemple un faisceau dévié de 45° par rapport au plan d'émission de la barette nécessite des retards pouvant atteindre dix microsecondes et la valeur de ces retards doit être maîtrisée avec une grande précision, de l'ordre de 20 nanosecondes. La réalisation de ces retards pose des problèmes technologiques complexes. D'autre part, on a constaté que la sensibilité d'un élément piézo électrique diminue rapidement à la réception lorsque l'angle d'incidence du faisceau correspondant augmente.

L'invention a pour but de résoudre ces inconvénients en proposant, d'une part, une nouvelle structure de sonde permettant de reconstituer une image à partir de balayages angulaires d'ouvertures relativement faibles et, d'autre part, un échographe incorporant une telle sonde.

Plus précisément, l'invention concerne donc une sonde à ultrasons pour un balayage sectoriel électronique comprenant au moins un alignement d'éléments transducteurs, caractérisée en ce qu'elle comporte plusieurs groupes d'éléments transducteurs respectivement alignés suivant des portions consécutives d'un contour convexe, chaque portion se distinguant d'une portion adjacente par une discontinuité et/ou un rayon de courbure différent.

Bien entendu, le rayon de courbure d'une portion de contour donné peut être infini, ce qui signifie que les éléments transducteurs du groupe correspondant sont alignés suivant une portion de droite. Selon le mode de réalisation le plus simple, la sonde comportera donc deux groupes adjacents par exemple alignés suivant des portions de droites ou de courbes (ou une droite et une courbe) faisant entre elles un certain angle. Un autre mode de réalisation qui sera décrit en détail plus loin comportera au moins trois groupes précités d'éléments transducteurs alignés suivant des portions de droites consécutives, faisant entre elles des angles obtus égaux.

Selon un mode de réalisation particulièrement simple, la sonde comportera au moins trois groupes précités alignés suivant des portions de droite consécutives, faisant entre elles des angles obtus égaux.

Ainsi, les différents groupes d'éléments transducteurs, orientés différemment, peuvent être affectés à l'insonation de secteurs angulaires adjacents dans le plan d'une coupe à imager, ces secteurs angulaires ayant des ouvertures relativement faibles (donc nécessitant des retards comparativement plus faibles) dont la juxtaposition sur un moyen de visualisation restitue une image à large champ. Il est à noter que le nombre total d'éléments transducteurs est pratiquement identique à ce qui serait nécessaire (avec des lois de retards technologiquement plus difficiles à réaliser) pour restituer une image à large champ comparable, à partir d'une barrette linéaire unique. Les dimensions de la sonde sont aussi du même ordre de grandeur (plutôt inférieures) ce qui est un critère important pour certains types d'examen.

Le fait que le nombre d'éléments transducteurs n'est pas plus élevé que par le passé a d'autres conséquences sur l'électronique de traitement associée.

- Si on fait correspondre une voie d'émission-réception à chaque élément transducteur, la complexité de l'échographe est la même que par le passé, mais on peut piloter chaque groupe indépendamment et la cadence d'images peut donc être multipliée par le nombre de groupes.

- Inversement, pour une même cadence d'images, des moyens de multiplexages peu coûteux permettent de diviser le nombre de voies d'émission-réception par le nombre de groupes d'éléments transducteurs précités, ce qui se traduit par une nouvelle et importante réduction du prix de l'installation.

L'invention concerne également un échographe comportant une sonde à balayage sectoriel électronique, caractérisé en ce que cette sonde comporte plusieurs groupes d'éléments transducteurs alignés suivant des portions consécutives d'un contour convexe, et en ce qu'il comporte des moyens d'émission-réception pour organiser des séquences d'émission-réception à partir d'au moins un groupe d'éléments transducteurs, lesdits moyens d'émission-réception comportant un nombre de voies d'émission-réception au moins égal au nombre d'éléments transducteurs de l'un des groupes et chaque séquence mettant en jeu une loi de retards prédéterminée entre les éléments transducteurs dudit groupe, déterminant une directivité et une focalisation données à l'émission, et de préférence, une focalisation à la réception.

L'invention sera mieux comprise et d'autres avantages de celle-ci apparaîtront mieux à la lumière de la description qui va suivre, donnée uniquement à titre d'exemple et faite en référence aux dessins annexés dans lesquels:

- la figure 1 est un schéma bloc des éléments essentiels d'un échographe conforme à l'invention;

- la figure 2 représente schématiquement en perspective une sonde conforme au principe de l'invention, et, sous forme de schéma- bloc, les éléments essentiels d'un échographe équipé d'une telle sonde ;

- la figure 3 est une vue analogue à la figure 2, illustrant une variante d'exécution ;

- la figure 4 est une vue analogue à la figure 2, illustrant une autre variante d'exécution ;

- la figure 5 est une vue schématique de profil d'une sonde à ultrasons conforme à l'invention, utilisable en lieu et place de la sonde des figures 2 à 4;

- la figure 6 est une vue schématique de profil d'une autre sonde à ultrasons conforme à l'invention utilisable en lieu et place des sondes représentées sur les figures 2 à 5.

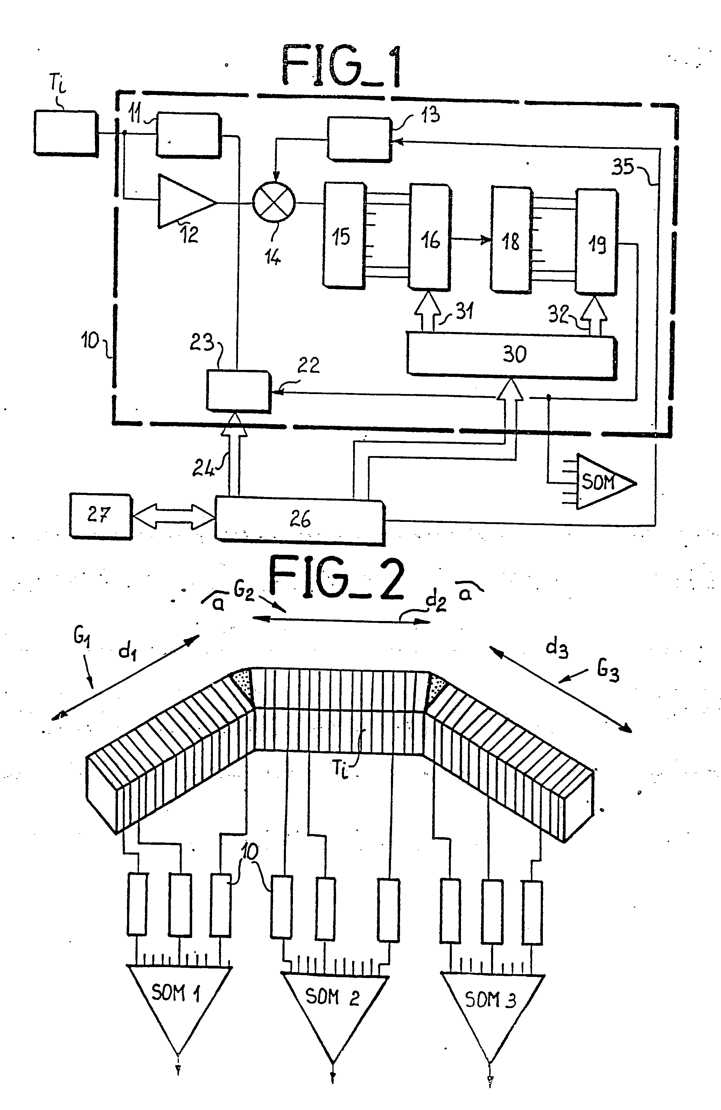

La figure 1 représente partiellement un agencement possible des moyens d'émission-réception d'un échographe utilisable avec une sonde à ultrasons selon la définition qui précède et le schéma montre plus particulièrement une voie d'emission-réception 10 associée à l'un des éléments transducteurs piézo électrique $T_i$ de l'un des groupes constituant la sonde. Cet élément transducteur est connecté à un émetteur 11, connu en soi, chargé de lui transmettre, à chaque tir, une impulsion ultrasonore à la fréquence choisie. Il est aussi relié à un amplificateur 12 chargé d'amplifier les échos reçus ultérieurement par ce même transducteur. Par ailleurs, un moyen de mise en forme 13 (trigger par exemple) d'une impulsion de commande et reliée à l'entrée d'un sommateur 14 qui reçoit aussi sur son autre entrée le signal de sortie de l'amplificateur 12. La sortie du sommateur 14 est reliée à l'entrée d'une première ligne à retards 15 dont les sorties sont respectivement reliées aux entrées d'un premier multiplexeur 16. La sortie de ce dernier est reliée à l'entreé d'une deuxième ligne à retards 18 dont les sorties sont respectivement reliées aux entrées d'un second multiplexeur 19. Les retards "disponibles" aux sorties des lignes à retards 15 et 18 diffèrent d'un ordre de grandeur, de sorte qu'on peut obtenir n'importe quel retard (dans la gamme des retards nécessaires pour obtenir un balayage sectoriel souhaité) et avec la précision requise, par l'adressage des multiplexeurs 16 et 19, sélectionnant chacun une sortie de la ligne à retards correpondante. La sortie du multiplexeur 19 est connectée, d'une part, à une entrée d'un amplificateur-sommateur SOM, recevant sur d'autres entrées les signaux retardés en provenance d'autres voies d'émission-réception analogues et, d'autre part, à l'entrée de déclenchement 22 d'un générateur d'impulsions 23 chargé d'élaborer à chaque tir une impulsion d'excitation de l'émetteur 11, retardée d'un temps voulu par rapport à l'impulsion délivrée par les moyens de mise en forme 13, ce temps étant déterminé par l'état des multiplexeurs 16 et 19. Le logiciel de commande détermine la durée de l'impulsion d'excitation par une liaison de commande 24 entre le microprocesseur-séquenceur 26 et le générateur 23. Ce microproceseur-séquenceur 26 et une mémoire-programme 27 (du type PROM) associée constituent l'essentiel du logiciel de commande des différentes voies 10. Le microprocesseur commande ainsi un générateur d'adresse 30 qui pilote les deux multiplexeurs 16 et 19 de chaque voie (liaisons d'adressage 31 et 32). Le même microprocesseur est couplé à la mémoire 27 pour sélectionner dans celle-ci la lecture des instructions correspondant à un séquencement donné résultant de la combinaison des paramètres choisis par l'opéra-

tur, notamment la fréquence des ultrasons. En fonction de ces paramètres, le processeur organise la lecture d'un certains nombres d'instructions de la mémoire-programme, régissant le cadencement des tirs d'ultrasons, leurs orientations (c'est-à-dire les lois de retards correspondantes) pour déterminer le balayage sectoriel électronique, les temps d'attente entre tirs, ect...

Pour l'excitation d'un émetteur 11, le processeur 26 émet un ordre de tir transmis par le fil de liaison 35 au moyen de mise en forme 13 et cet ordre est retardé en fonction du positionnement préalable des multiplexeurs 16 et 19 de la voie d'émission-réception 10 correspondante. Cet ordre déclenche le générateur d'impulsions 23 qui excite l'émetteur 11 pendant un intervalle de temps contrôlé par le logiciel de commande. A la réception, les échos captés par le même élément transducteur $T_i$ sont appliqués à l'entrée de l'amplificateur 12 et dirigés vers l'ensemble des lignes à retards 15, 18, pour y subir les mêmes retards avant d'être appliqués à l'entrée correspondante de l'amplificateur-sommateur SOM, réalisant ainsi une focalisation à la réception. Les signaux de sortie de l'amplicateur-sommateur SOM sont traités (notamment fenêtrés) avant d'être utilisés en tant que signaux vidéo d'un récepteur de télévision sur lequel l'image est reconstituée ligne par ligne en plusieurs secteurs angulaires adjacents correspondant au nombre de groupes d'éléments transducteurs définis dans la sonde.

La figure 2 illustre un mode de réalisation possible d'une sonde à ultrasons selon l'invention, prévu pour fonctionner avec le système de la figure 1. Selon l'exemple, la sonde comprend trois groupes G1, G2 et G3 d'éléments transducteurs $T_i$ alignés suivant des portions consécutives d'un contour convexe constitué ici de portions de droite consécutives d1, d2 et d3, faisant entre elles de angles obtus à égaux.

Dans l'exemple de la figure 2, chaque groupe G1, G2 ou G3 comporte le même nombre d'éléments transducteurs et chaque élément transducteur $T_i$ est couplé à une voie d'émission-réception 10 conforme à la figure 1. Cependant, les sorties des voies correspondant aux éléments de chaque groupe sont reliées respectivement aux entrées de trois amplificateurs-sommateurs $SOM_1$, $SOM_2$, et $SOM_3$, de façon que les signaux de sortie de ces trois amplificateurs puissent être utilisés simultanément. Dans ce mode de réalisation, les moyens de commande des voies d'émission-réception (c'est-à-dire essentiellement le processeur 26 et la mémoire-programme 27) sont agencés et programmés pour engendrer sensiblement simultanément une séquence d'émission-réception dans chaque groupe. Autrement dit, le système est prévu pour engendrer trois tirs d'ultrasons simultanément, chaque tir mettant en oeuvre tous les éléments d'un groupe G1, G2, G3 en associant chaque fois à chaque groupe une loi de retards prédéterminée, définissant à la fois les caractéristiques focales du faisceau d'ultrasons émis et son orientation par rapport à la surface émissive du group correspondant. Les signaux recueillis par les éléments transducteurs de chaque groupe sont retardés les uns par rapport aux autres, par application des mêmes lois de retards, avant d'être additionnés par l'amplificateur-sommateur SOM1, SOM2 ou SOM3 correspondant. Les signaux de sortie de ces amplificateurs sont traités de façon classique pour élaborer trois signaux vidéo distincts appliqués sensiblement simultanément à un moniteur de télévision (non représenté) pour moduler trois lignes de balayage s'inscrivant respectivement dans trois secteurs adjacents de l'image. On conçoit que la cadence des images a été multipliée par le nombre de groupes sans augmenter sensiblement la complexité des circuits électroniques associés puisque le nombre d'éléments transducteurs est approximativement égal à celui d'une barrette linéaire fonctionnant en "phase array". A titre d'exemple, une telle barrette linéaire classique nécessite 64 éléments transducteurs pour balayer électroniquement un secteur angulaire de 90°, avec des retards importants pour certains éléments transducteurs. Avec le système de la figure 1, le même secteur angulaire est balayé trois fois plus rapidement par association de trois secteurs angulaires adjacents de 30° balayés, chacun, par un groupe G1, G2 ou G3 de 22 éléments transducteurs (soit un total de 66 voies d'émission-réception 10). Les lois de retards concernant chaque groupe mettent en oeuvre des valeurs de retards beaucoup plus faibles donc des lignes à retards plus faciles à construire avec la précision requise et par conséquent moins coûteuses.

Avec le mode de réalisation de la figure 2, on peut en particulier obtenir une image de grande ouverture angulaire. On peut en effet affecter à chaque groupe un balayage de 45° soit une ouverture totale de 135°. Si on choisit un pas inter-éléments égal à la longueur d'onde des ultrasons et 32 éléments par groupes, la largeur d'un groupe et de 16 mm pour une fréquence de fonctionnement de 3 MHz et l'ensemble de la surface émettrice de la sonde s'inscrit dans un rayon moyen de 22 mm. L'échographe associé comporte bien entendu 96 voies d'émission-réception. Pour éviter ou limiter les interférences entre les échos provenant de tirs simultanés effectués à partir des trois groupes, il est avantageux de choisir les lois de retards pour que les directions des trois tirs fassent toujours des angles de 45° les unes par rapport aux autres.

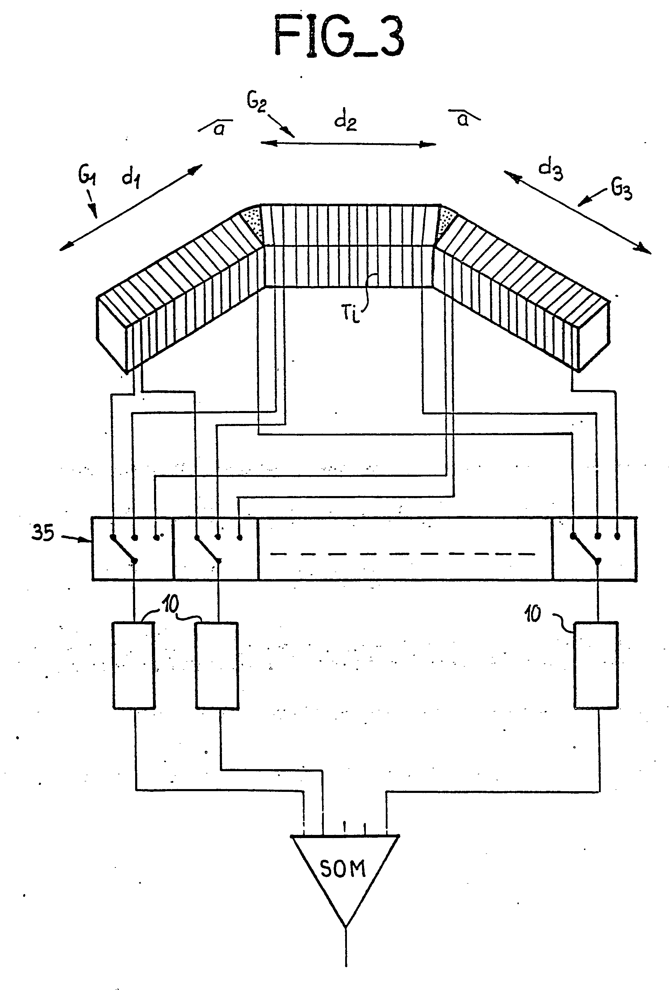

La figure 3 illustre un autre mode de réalisation pour lequel la cadence des images est la même que dans un système classique mais avec environ trois fois moins de circuits électroniques de traitement. La sonde proprement dite est la même que précédemment, c'est-à-dire que chaque groupe G1, G2 et G3 comporte le même nombre d'éléments transducteurs. En revanche les moyens d'émission-réception ne comportent qu'un nombre de voies d'émission-réception 10 égal au nombre d'éléments transducteurs d'un groupe tandis que des moyens de commutation séquentielle, sous la forme d'un multiplexeur 35, sont intercalés entre les groups G1, G2 et G3 et les voies d'émission-réception 10 (au nombre de 22 seulement dans l'exemple décrit, les sorties de signal de ces voies étant reliées à un unique amplificateur- sommateur SOM) pour interconnecter cycliquement et dans un ordre donné, les éléments transducteurs $T_i$ des groupes et lesdites voies d'émission-réception 10. Plus précisément, le multiplexeur 35 est par exemple constitué d'une pluralité de portes analogiques connectées de façon à comporter trois entrées pour une sortie. Ces entrées sont interconnectées à la sonde de façon à regrouper les fils de sortie des éléments transducteurs homologues de chaque groupe vers la même sortie de multiplexage reliée à une même voie d'émission-réception 10. Le processeur 26 et la mémoire 27 pilotent, par exemple, le multiplexeur de la façon suivante. Pendant une première phase, tous les éléments du groupe G1 sont connectés aux voies d'émission-réception 10 pendant tout le temps des séquences d'émission-réception assurant un premier balayage d'un secteur de 30°. Puis le groupe G2 est substitué au groupe G1 par commutation du multiplexeur et les éléments transducteurs du groupe G2 sont reliés aux voies d'émission-réception pendant le temps d'un second balayage d'un secteur de 30° adjacent au précédent. Enfin, l'ensemble des éléments du groupe G3 est raccordé aux mêmes voies d'émission-réception pour le temps d'un troisième balayage d'un secteur de 30° adjacent.

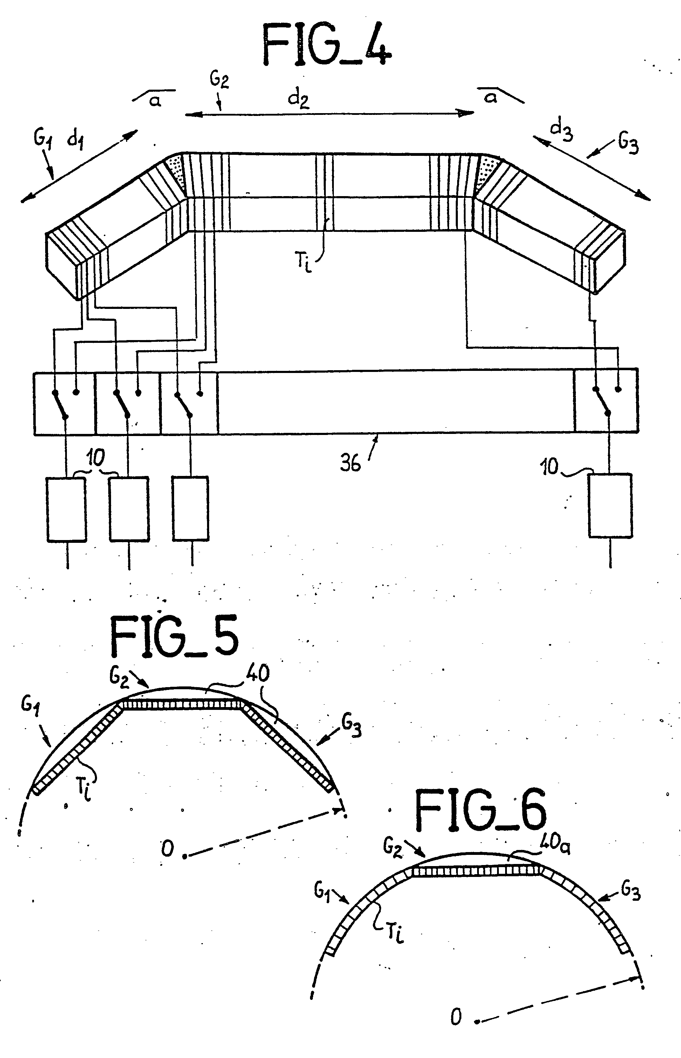

D'autres variantes sont possibles, comme par exemple celles de la figure 4 où la sonde a été modifiée pour que les deux groupes latéraux G1 et G3 situés symétriquement de part et d'autre d'un groupe central G2 comportent chacun un nombre d'éléments transducteurs égal à la moitié du nombre d'éléments transducteurs dudit groupe central. Cette configuration présente certains avantages lorsqu'on désire que la zone centrale de l'image soit de très bonne qualité tout en conservant un champ angulaire important, les zones latérales servant alors surtout au repèrage. A titre d'exemple, le groupe central G2 peut couvrir un champs angulaire de 30° seulement et comporter 64 éléments transducteurs tandis que les groupes latéraux G1 et G3 peuvent couvrir un champ angulaire de 45° chacun mais ne comporter que 32 éléments par groupe. Des moyens de commutation séquentielle, sous forme d'un multiplexeur 36, sont intercalés entre la sonde et les moyens d'émission-réception de l'échographe, lesquels comportent alors autant de voies d'émission-réception 10 que le groupe central G2 comporte d'éléments transducteurs $T_i$. Ce multiplexeur 36 comporte deux entrées pour une sortie par unité de commutation. Les entrées sont reliées à la sonde pour connecter à tour de rôle et cycliquement les fils de sortie des éléments transducteurs du groupe central G2 aux différentes voies d'émission-réception 10 puis les fils de sortie des éléments transducteurs des groupes latéraux G1 et G3 avec ces mêmes voies d'émission-réception 10. Les commutations successives du multiplexeur sont contrôlées par le logiciel de commande de l'échographe comportant essentiellement le processeur 26 et la mémoire-programme 27.

La figure 5 montre schématiquement et de profil une sonde analogue à celle de la figure 2 dans laquelle les trois faces émissives des groupes G1, G2 et G3 sont enrobées d'une couche 40 de matériau, par exemple un matériau élastomètre, matérialisant une surface externe convexe continue de rayon de courbure constant dans le plan de la région à imager, c'est-à-dire le plan du dessin. Cette particularité est applicable à toutes les sondes décrites ci-dessus. On peut aussi modifier la sonde conformément à la représentation de la figure 6 dans laquelle elle comporte un groupe central G2 d'éléments transducteurs alignés suivant une portion de droite et deux groupes latéraux G1 et G3 dans lesquels les éléments transducteurs sont disposés suivant des portions de courbe et, plus précisément ici, suivant des arcs d'un cercle commun de centre O. Bien entendu, une couche de matériau élastomère 40a peut être disposée à la surface du groupe central G2. Dans ce cas, la surface externe convexe de la couche de matériau élastomère matérialise une surface extérieure convexe de rayons de courbure constante et de centre O, se raccordant de façon continue aux surfaces émissives courbes des groupes G1 et G2. La matériau élastomère ainsi disposé a un effet de "lentille" procurant une focalisation moyenne dans la direction perpendiculaire au plan de l'image. La configuration inverse de celle de la figure 6 peut aussi donner de bons résultats. Dans ce cas, les deux groupes latéraux G1, G3 auraient leurs éléments transducteurs disposés suivant des portions de droites et le groupe central G2 aurait ses éléments disposés suivant une portion de courbe, par exemple un arc de cercle, le matériau élastomère mentionné ci-dessus recouvrant les surfaces émissives des éléments transducteurs des groupes G1 et G3.

## Revendications

1. Dispositif d'échographie comprenant une sonde munie d'une pluralité de transducteurs piézo-électriques (2) situés sur une surface convexe, cette surface étant telle que les faces émissives des transducteurs sont disposées de façon à émettre en direction du côté convexe de ladite surface, ainsi que des éléments de retard (4) susceptibles d'induire un retard dans des signaux associés à ces transducteurs piézo-électriques (2), caractérisé par le fait qu'il comprend des moyens (60) de commutation permettant de rendre actif un nombre optimisé de transducteurs (2) en fonction d'une direction de tir de façon à insonifier au mieux cette direction.

2. Dispositif d'échographie selon la revendication 1, caractérisé par le fait que ces transducteurs piézo-électriques (2) sont situés sur un arc de cercle convexe.

3. Dispositif selon la revendication 1 ou la revendication 2, caractérisé en ce que la sonde a une allure symétrique par rapport à une direction centrale et en ce que les moyens de commutation permettant de rendre actif un moins grand nombre de transducteurs pour insonifier les directions latérales par rapport à cette direction centrale que pour insonifier cette direction centrale elle-même.

EP 0 311 150 A1

0177407

FIG_1

FIG_2

0177407

# FIG_3

0177407

# FIG_4

# FIG_5

# FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 462 092 (KAWABUCHI et al.)<br>* Résumé; colonne 1, ligne 49 - colonne 2, ligne 27; colonne 2, lignes 49-58; colonne 3, ligne 67 - colonne 5, ligne 6; revendications *<br>--- | 1,2 | G 01 S 7/62<br>G 01 S 15/89<br>G 10 K 11/32<br>G 10 K 11/34 |
| X | GB-A-2 079 102 (MATSUSHITA)<br>* Résumé; page 1, lignes 53-84; page 1, ligne 106 - page 3, ligne 5; revendications *<br>--- | 1,2 | |
| X | US-A-4 344 327 (YOSHIKAWA et al.)<br>* Résumé; colonne 2, ligne 43 - colonne 3, ligne 11; colonne 3, ligne 46 - colonne 8, ligne 10; revendications *<br>--- | 1,2 | |
| X | US-A-4 409 982 (PLESSET et al.)<br>* Résumé; colonne 3, ligne 60 - colonne 4, ligne 64; colonne 5, ligne 18 - colonne 7, ligne 50; revendications *<br>----- | 1,2 | |

**DOMAINES TECHNIQUES RECHERCHES (Int. Cl.4)**

G 01 S
G 10 K

Le présent rapport a été établi pour toutes les revendications

| Lieu de la recherche | Date d'achèvement de la recherche | Examinateur |
|---|---|---|
| LA HAYE | 14-12-1988 | OLDROYD D.L. |